# EUROPEAN PATENT APPLICATION

(11) **EP 4 632 454 A1**
(43) Date of publication of application: **15.10.2025**
(21) Application number: 23900386.6
(22) Date of filing: 09.11.2023
(51) Int. Cl.: G02B 6/38, G02B 6/02

(54) **CONNECTOR-EQUIPPED OPTICAL FIBER CABLE AND OPTICAL TRANSMISSION SYSTEM**

(30) Priority: 09.12.2022 JP 2022196942
(71) Applicant: SUMITOMO ELECTRIC INDUSTRIES, LTD., Osaka-shi, Osaka 541-0041 (JP)
(72) Inventor: ARAO, Yuki, Osaka-shi, Osaka 541-0041 (JP); MORISHIMA, Tetsu, Osaka-shi, Osaka 541-0041 (JP)
(74) Representative: TBK
(86) International application number: PCT/JP2023/040406
(87) International publication number: WO 2024/122265

(57) **Abstract**

A connector-equipped optical fiber cable (1) comprises a multicore optical fiber (31), a first optical connector (3) that is attached to a first end of the multicore optical fiber, and a second optical connector (4) that is attached to a second end of the multicore optical fiber. An arrangement from a first core to an Nth core is rotationally asymmetrical about the center axis of the multicore optical fiber (31) in a cross section perpendicular to the center axis. The first optical connector (3) and the second optical connector (4) are a type of optical connector that is connected to an optical connector to be connected to in a state of alignment of the upward direction thereof with that of the optical connector to be connected to. When connection end surfaces of the first optical connector (3) and the second optical connector (4) are viewed with the upward directions of the connectors aligned, the arrangement from the first core to the Nth core in the connection end surface of the second optical connector (4) is the arrangement obtained by inverting the arrangement from the first core to the Nth core in the connection end surface of the first optical connector (3) about a center axis line (A3) of the connection end surface that is along the direction in which the upward directions are aligned.

## Description

### TECHNICAL FIELD

The present disclosure relates to a connector-attached optical fiber cable and an optical transmission system. This application claims priority based on Japanese Patent Application No. 2022-196942 filed on December 9, 2022, the entire contents of which are incorporated herein by reference.

### BACKGROUND ART

Patent literature 1 and 2 disclose connector-attached optical fiber cables including multicore optical fibers.

### CITATION LIST

### PATENT LITERATURE

Patent literature 1: U.S. Pat. No. 10859772 specification
Patent literature 2: WO 2022/118985

### SUMMARY OF INVENTION

A connector-attached optical fiber cable according to an aspect of the present disclosure includes a multicore optical fiber having a first core to an Nth core (N is an integer of 2 or more), a first optical connector attached to a first end of the multicore optical fiber, and a second optical connector attached to a second end of the multicore optical fiber. An arrangement from the first core to the Nth core is rotationally asymmetric about a central axis of the multicore optical fiber in a cross section of the multicore optical fiber perpendicular to the central axis. The first optical connector and the second optical connector are optical connectors of a type configured to be connected to a connection counterpart optical connector in a state in which upward directions of the first optical connector and the second optical connector are aligned with an upward direction of the connection counterpart optical connector. When connection end surfaces of the first optical connector and the second optical connector are viewed with the upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction in which the upward directions of the optical connectors are aligned.

### BRIEF DESCRIPTION OF THE DRAWINGS

FIG. 1A is a perspective view illustrating a type of optical connector.
FIG. 1B is a perspective view illustrating a type of optical connector.
FIG. 2 is a perspective view illustrating a plurality of connector-attached optical fiber cables to be connected to each other.
FIG. 3A is a schematic diagram illustrating an example of a cross section perpendicular to a central axis of a multicore optical fiber included in an optical fiber cable.
FIG. 3B is a schematic diagram illustrating an example of a cross section perpendicular to a central axis of a multicore optical fiber included in an optical fiber cable.
FIG. 4A is a schematic diagram illustrating another example of a cross section perpendicular to a central axis of a multicore optical fiber included in an optical fiber cable.
FIG. 4B is a schematic diagram illustrating another example of a cross section perpendicular to a central axis of a multicore optical fiber included in an optical fiber cable.
FIG. 5 is a diagram illustrating a core arrangement in each of a first optical connector and a second optical connector in one connector-attached optical fiber cable when connection end surfaces thereof are viewed from the front.
FIG. 6 is a table illustrating a correspondence of cores.
FIG. 7A is a perspective view illustrating an appearance of an MPO connector.
FIG. 7B is a perspective view illustrating an appearance of an MT ferrule included in the MPO connector.
FIG. 8A is a front view of a connection end surface of the MT ferrule.
FIG. 8B is a side view of the MT ferrule.
FIG. 8C is a side view of the MT ferrule.
FIG. 9A is a side view illustrating two MT ferrules with connection end surfaces facing each other.
FIG. 9B is a side view illustrating two MT ferrules with connection end surfaces facing each other.

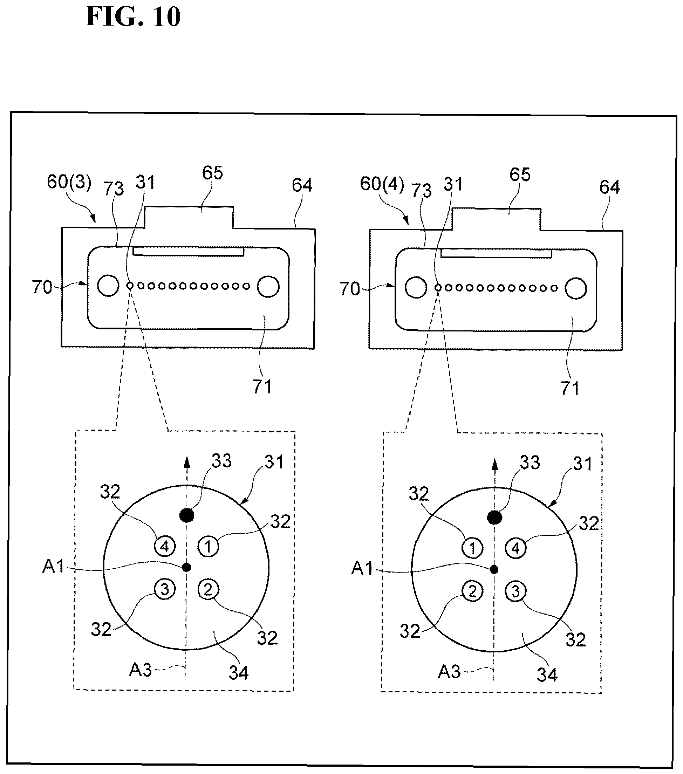

FIG. 10 is a diagram illustrating a core arrangement of an optical fiber in each of the first optical connector and the second optical connector when the connection end surfaces of the first optical connector and the second optical connector in one connector-attached optical fiber cable are viewed from the front in a case in which the first optical connector and the second optical connector are MPO connectors. FIG. 10 illustrates the core arrangement of one representative optical fiber among a plurality of optical fibers included in the connector-attached optical fiber cable, and core arrangements of the other optical fibers are also the same as that in FIG. 10.
FIG. 11 is a table illustrating a correspondence of cores.
FIG. 12A is a diagram illustrating a modification in the number and arrangement of the cores.
FIG. 12B is a diagram illustrating a modification in the number and arrangement of the cores.
FIG. 12C is a diagram illustrating a modification in the number and arrangement of the cores.
FIG. 12D is a diagram illustrating a modification in the number and arrangement of the cores.
FIG. 13 is a diagram illustrating another embodiment of a core arrangement in each of the first optical connector and the second optical connector in one connector-attached optical fiber cable when the connection end surfaces thereof are viewed from the front.
FIG. 14A is a diagram illustrating an effect obtained by the core arrangement illustrated in FIG. 13.
FIG. 14B is a diagram illustrating an effect obtained by the core arrangement illustrated in FIG. 13.
FIG. 14C is a diagram illustrating an effect obtained by the core arrangement illustrated in FIG. 13.
FIG. 14D is a diagram illustrating an effect obtained by the core arrangement illustrated in FIG. 13.
FIG. 14E is a diagram illustrating the effect obtained by the core arrangement illustrated in FIG. 13.
FIG. 14F is a diagram illustrating an effect obtained by the core arrangement illustrated in FIG. 13.
FIG. 14G is a diagram illustrating an effect obtained by the core arrangement illustrated in FIG. 13.
FIG. 14H is a diagram illustrating an effect obtained by the core arrangement illustrated in FIG. 13.
FIG. 15A is a diagram illustrating an effect obtained by the core arrangement illustrated in FIG. 13.
FIG. 15B is a diagram illustrating an effect obtained by the core arrangement illustrated in FIG. 13.
FIG. 15C is a diagram illustrating an effect obtained by the core arrangement illustrated in FIG. 13.
FIG. 15D is a diagram illustrating an effect obtained by the core arrangement illustrated in FIG. 13.
FIG. 15E is a diagram illustrating an effect obtained by the core arrangement illustrated in FIG. 13.
FIG. 15F is a diagram illustrating an effect obtained by the core arrangement illustrated in FIG. 13.
FIG. 15G is a diagram illustrating an effect obtained by the core arrangement illustrated in FIG. 13.
FIG. 15H is a diagram illustrating an effect obtained by the core arrangement illustrated in FIG. 13.
FIG. 16A is a diagram illustrating a modification in the number and arrangement of the cores.
FIG. 16B is a diagram illustrating a modification in the number and arrangement of the cores.
FIG. 16C is a diagram illustrating a modification in the number and arrangement of the cores.
FIG. 16D is a diagram illustrating a modification in the number and arrangement of the cores.
FIG. 17 is a top view schematically illustrating one SC connector and another SC connector as a connection counterpart of the SC connector in a case in which connection end surfaces of ferrules of SC connectors are inclined in a lateral direction.
FIG. 18 is a diagram illustrating a core arrangement in each of the first optical connector and the second optical connector in one connector-attached optical fiber cable when the connection end surfaces thereof are viewed from the front in a case in which the first optical connector and the second optical connector are the SC connectors illustrated in FIG. 17.
FIG. 19A is a diagram illustrating a core arrangement in a case in which the first optical connector and the second optical connector are optical connectors of a type configured to be connected to a connection counterpart optical connector in a state in which upward directions of the first optical connector and the second optical connector are aligned with an upward direction of the connection counterpart optical connector, and the arrangement from the first core to the Nth core is rotationally asymmetric about the central axis.
FIG. 19B is a diagram illustrating a core arrangement in a case in which the first optical connector and the second optical connector are optical connectors of a type configured to be connected to a connection counterpart optical connector in a state in which the upward directions of the first optical connector and the second optical connector are aligned with the upward direction of the connection counterpart optical connector, and the arrangement from the first core to the Nth core is rotationally asymmetric about the central axis.
FIG. 20A is a diagram illustrating a core arrangement in a case in which the first optical connector and the second optical connector are optical connectors of a type configured to be connected to a connection counterpart optical connector in a state in which the upward directions of the first optical connector and the second optical connector are inverted with respect to the upward direction of the connection counterpart optical connector, and the arrangement from the first core to the Nth core is rotationally asymmetric about the central axis.
FIG. 20B is a diagram illustrating a core arrangement in a case in which the first optical connector and the second optical connector are optical connectors of a type configured to be connected to a connection counterpart optical connector in a state in which the upward directions of the first optical connector and the second optical connector are inverted with respect to the upward direction of the connection counterpart optical connector, and the arrangement from the first core to the Nth core is rotationally asymmetric about the central axis.
FIG. 21A is a diagram illustrating an effect obtained by the core arrangement illustrated in FIG. 20.
FIG. 21B is a diagram illustrating an effect obtained by the core arrangement illustrated in FIG. 20.
FIG. 21C is a diagram illustrating an effect obtained by the core arrangement illustrated in FIG. 20.
FIG. 21D is a diagram illustrating an effect obtained by the core arrangement illustrated in FIG. 20.
FIG. 21E is a diagram illustrating an effect obtained by the core arrangement illustrated in FIG. 20.
FIG. 21F is a diagram illustrating an effect obtained by the core arrangement illustrated in FIG. 20.
FIG. 21G is a diagram illustrating an effect obtained by the core arrangement illustrated in FIG. 20.
FIG. 21H is a diagram illustrating an effect obtained by the core arrangement illustrated in FIG. 20.
FIG. 22A is a diagram illustrating an effect obtained by the core arrangement illustrated in FIG. 20.
FIG. 22B is a diagram illustrating an effect obtained by the core arrangement illustrated in FIG. 20.
FIG. 22C is a diagram illustrating an effect obtained by the core arrangement illustrated in FIG. 20.
FIG. 22D is a diagram illustrating an effect obtained by the core arrangement illustrated in FIG. 20.
FIG. 22E is a diagram illustrating an effect obtained by the core arrangement illustrated in FIG. 20.
FIG. 22F is a diagram illustrating an effect obtained by the core arrangement illustrated in FIG. 20.
FIG. 22G is a diagram illustrating an effect obtained by the core arrangement illustrated in FIG. 20.
FIG. 22H is a diagram illustrating an effect obtained by the core arrangement illustrated in FIG. 20.
FIG. 23 is a schematic diagram illustrating an optical transmission system including two types of connector-attached optical fiber cables as a first modification.
FIG. 24A is a diagram illustrating an example in which the first optical connector and the second optical connector are optical connectors of a type configured to be connected to a connection counterpart optical connector in a state in which the upward directions of the first optical connector and the second optical connector are inverted with respect to the upward direction of the connection counterpart optical connector, and the end surfaces of the first optical fiber to the Mth optical fiber are arranged in multiple lines in the connection end surfaces.
FIG. 24B is a diagram illustrating an example in which the first optical connector and the second optical connector are optical connectors of a type configured to be connected to a connection counterpart optical connector in a state in which the upward directions of the first optical connector and the second optical connector are inverted with respect to the upward direction of the connection counterpart optical connector, and the end surfaces of the first optical fiber to the Mth optical fiber are arranged in multiple lines in the connection end surfaces.
FIG. 25A is a diagram illustrating an example in which the first optical connector and the second optical connector are optical connectors of a type configured to be connected to the connection counterpart optical connector in a state in which the upward directions of the first optical connector and the second optical connector are inverted with respect to the upward direction of the connection counterpart optical connector, and the end surfaces of the first optical fiber to the Mth optical fiber are arranged in multiple lines in the connection end surfaces.
FIG. 25B is a diagram illustrating an example in which the first optical connector and the second optical connector are optical connectors of a type configured to be connected to the connection counterpart optical connector in a state in which the upward directions of the first optical connector and the second optical connector are inverted with respect to the upward direction of the connection counterpart optical connector, and the end surfaces of the first optical fiber to the Mth optical fiber are arranged in multiple lines in the connection end surfaces.

### DETAILED DESCRIPTION

### [Problems to be Solved by Present Disclosure]

When connecting multicore optical fibers (MCFs) to each other, in order to suppress a connection loss, it is necessary to mutually adjust the rotation angles of a first MCF and a second MCF about the central axes thereof so that the positions of a plurality of cores on the end surface of the first MCF coincide with the respective positions of a plurality of cores on the end surface of the second MCF (see Patent literature 1 and 2). However, in a case of simply making alignment of the plurality of cores between the MCFs without identifying each of the cores, it is necessary to manage, for each optical fiber cable, which of cores in another optical fiber cable to be connected to the optical fiber cable propagates light propagating through a certain core in the optical fiber cable, which makes the connection work extremely complicated.

An object of the present disclosure is to provide a connector-attached optical fiber cable and an optical transmission system that can simplify connection work without a need to manage which of cores light propagates through for each optical fiber cable.

### [Advantageous Effects of Present Disclosure]

According to the present disclosure, it is possible to provide a connector-attached optical fiber cable and an optical transmission system that can simplify connection work without a need to manage which of cores light propagates through for each optical fiber cable.

### [Description of Embodiments of Present Disclosure]

First, the contents of embodiments of the present disclosure will be listed and described.
[1] A connector-attached optical fiber cable according to an aspect of the present disclosure includes a multicore optical fiber having a first core to an Nth core (N is an integer of 2 or more), a first optical connector attached to a first end of the multicore optical fiber, and a second optical connector attached to a second end of the multicore optical fiber. An arrangement from the first core to the Nth core is rotationally asymmetric about a central axis of the multicore optical fiber in a cross section of the multicore optical fiber perpendicular to the central axis. The first optical connector and the second optical connector are optical connectors of a type configured to be connected to a connection counterpart optical connector in a state in which upward directions of the first optical connector and the second optical connector are aligned with an upward direction of the connection counterpart optical connector. When connection end surfaces of the first optical connector and the second optical connector are viewed with the upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction in which the upward directions of the optical connectors are aligned.
[2] A connector-attached optical fiber cable according to an aspect of the present disclosure includes a multicore optical fiber having a first core to an Nth core (N is an integer of 2 or more), a first optical connector attached to a first end of the multicore optical fiber, and a second optical connector attached to a second end of the multicore optical fiber. An arrangement from the first core to the Nth core is rotationally asymmetric about a central axis of the multicore optical fiber in a cross section of the multicore optical fiber perpendicular to the central axis. The first optical connector and the second optical connector are optical connectors of a type configured to be connected to a connection counterpart optical connector in a state in which upward directions of the first optical connector and the second optical connector are inverted with respect to an upward direction of the connection counterpart optical connector. When connection end surfaces of the first optical connector and the second optical connector are viewed with the upward directions of the optical connectors aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction orthogonal to a direction in which the upward directions of the optical connectors are aligned.
[3] A connector-attached optical fiber cable according to an aspect of the present disclosure includes a multicore optical fiber having a first core to an Nth core (N is an integer of 2 or more), a first optical connector attached to a first end of the multicore optical fiber, and a second optical connector attached to a second end of the multicore optical fiber. An arrangement from the first core to the Nth core is rotationally symmetric about a central axis of the multicore optical fiber in a cross section of the multicore optical fiber perpendicular to the central axis. When connection end surfaces of the first optical connector and the second optical connector are viewed with upward directions of the optical connectors aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction in which the upward directions of the optical connectors are aligned.
[4] In the connector-attached optical fiber cable according to the above [3], the first optical connector and the second optical connector may be optical connectors of a type configured to be connected to a connection counterpart optical connector in a state in which the upward directions of the first optical connector and the second optical connector are aligned with an upward direction of the connection counterpart optical connector.
[5] In the connector-attached optical fiber cable according to the above [3], the first optical connector and the second optical connector may be optical connectors of a type configured to be connected to a connection counterpart optical connector in a state in which the upward directions of the first optical connector and the second optical connector are inverted with respect to an upward direction of the connection counterpart optical connector.
[6] A connector-attached optical fiber cable according to an aspect of the present disclosure includes a multicore optical fiber having a first core to an Nth core (N is an integer of 2 or more), a first optical connector attached to a first end of the multicore optical fiber, and a second optical connector attached to a second end of the multicore optical fiber. An arrangement from the first core to the Nth core is rotationally symmetric about a central axis of the multicore optical fiber in a cross section of the multicore optical fiber perpendicular to the central axis. The first optical connector and the second optical connector are optical connectors of a type configured to be connected to a connection counterpart optical connector in a state in which upward directions of the first optical connector and the second optical connector are inverted with respect to an upward direction of the connection counterpart optical connector. When connection end surfaces of the first optical connector and the second optical connector are viewed with the upward directions of the optical connectors aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction orthogonal to a direction in which the upward directions of the optical connectors are aligned.
[7] In the connector-attached optical fiber cable according to any one of the above [1] to [6], the first optical connector and the second optical connector may have different structures of portions fitted to the connection counterpart optical connector.
[8] In the connector-attached optical fiber cable according to any one of the above [1] to [7], the connection end surfaces may be perpendicular to the central axis of the multicore optical fiber.
[9] In the connector-attached optical fiber cable according to any one of the above [2], [5], and [6], the connection end surfaces may be inclined with respect to a virtual plane perpendicular to the central axis of the multicore optical fiber.
[10] In the connector-attached optical fiber cable according to any one of the above [3] to [6], the multicore optical fiber may have a marker for identifying the first core to the Nth core.
[11] An optical transmission system according to an aspect of the present disclosure includes a first connector-attached optical fiber cable that is the connector-attached optical fiber cable according to the above [1], and a second connector-attached optical fiber cable that is the connector-attached optical fiber cable according to the above [2]. An appearance of the second connector-attached optical fiber cable is different from an appearance of the first connector-attached optical fiber cable.
[12] An optical transmission system according to an aspect of the present disclosure includes a third connector-attached optical fiber cable that is the connector-attached optical fiber cable according to the above [3], and a fourth connector-attached optical fiber cable that is the connector-attached optical fiber cable according to the above [6]. An appearance of the fourth connector-attached optical fiber cable is different from an appearance of the third connector-attached optical fiber cable.

### [Details of Embodiments of Present Disclosure]

Specific examples of the connector-attached optical fiber cable and the optical transmission system according to the present embodiment will be described with reference to the drawings as necessary. The present disclosure is not limited to these examples, but is defined by the claims, and is intended to include all modifications within the meaning and scope equivalent to the scope of the claims. In the following description, the same elements are denoted by the same reference numerals in the description of the drawings, and redundant description thereof will be omitted.

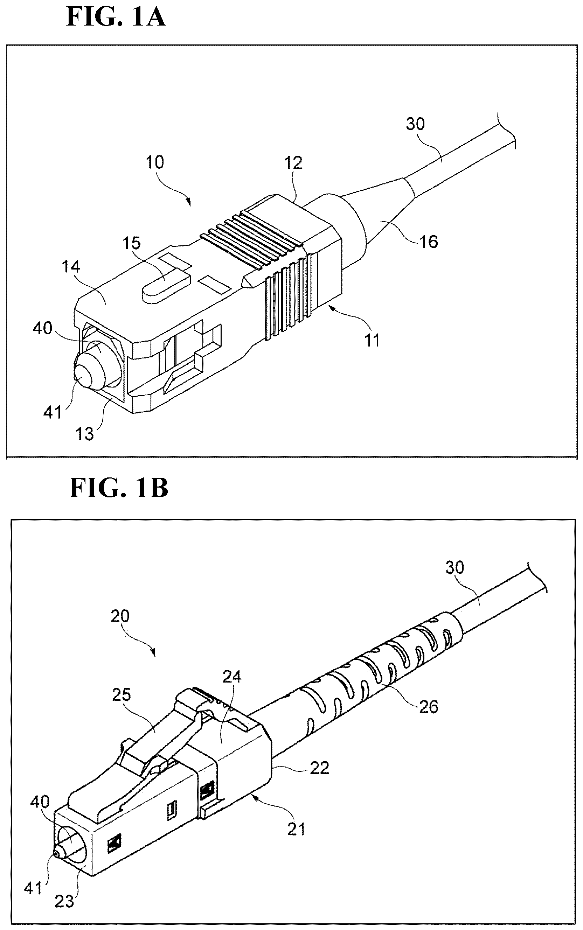

FIG. 1A and FIG. 1B are perspective views illustrating types of optical connectors. FIG. 1A illustrates a SC connector 10 as a type of optical connector. As illustrated in FIG. 1A, SC connector 10 includes a housing 11 made of resin. An optical fiber cable 30 extends from a boot 16 attached to a rear end 12 of housing 11. The number of optical fibers included in optical fiber cable 30 is one. A ferrule 40 having a cylindrical shape protrudes from a front end 13 of housing 11. Ferrule 40 holds a tip portion of the optical fiber included in optical fiber cable 30. At a connection end surface 41 of ferrule 40, an end surface of the optical fiber is exposed. Connection end surface 41 may be perpendicular to a central axis of the optical fiber, or may be inclined with respect to a virtual plane perpendicular to the central axis of the optical fiber. The inclination angle of connection end surface 41 with respect to the virtual plane is, for example, 8°.

A cross section of housing 11 perpendicular to the central axis of the optical fiber is rectangular. A protrusion (key) 15 extending in a central axis direction of the optical fiber is provided at a top surface 14 of housing 11 corresponding to one side of the rectangle. In other words, protrusion 15 is provided at a part of SC connector 10 in a circumferential direction, that is, at a part of an outer circumferential surface. Protrusion 15 is accommodated in a recess (key groove) formed in an adapter (not illustrated) to which SC connector 10 is fitted, and guides SC connector 10 with respect to the adapter when SC connector 10 is inserted into the adapter. Protrusion 15 defines an orientation of SC connector 10 in the circumferential direction. In the following description, when front end 13 is viewed along a central axis of SC connector 10 (i.e., the central axis of an optical fiber 31), a direction in which protrusion 15 is provided is defined as an upward direction.

FIG. 1B illustrates a LC connector 20 as another type of optical connector. As illustrated in FIG. 1B, LC connector 20 includes a housing 21 made of resin. Optical fiber cable 30 extends from a boot 26 attached to a rear end 22 of housing 21. Ferrule 40 protrudes from a front end 23 of housing 21. As in SC connector 10, connection end surface 41 of ferrule 40 in LC connector 20 may be perpendicular to the central axis of the optical fiber, or may be inclined with respect to the virtual plane perpendicular to the central axis of the optical fiber.

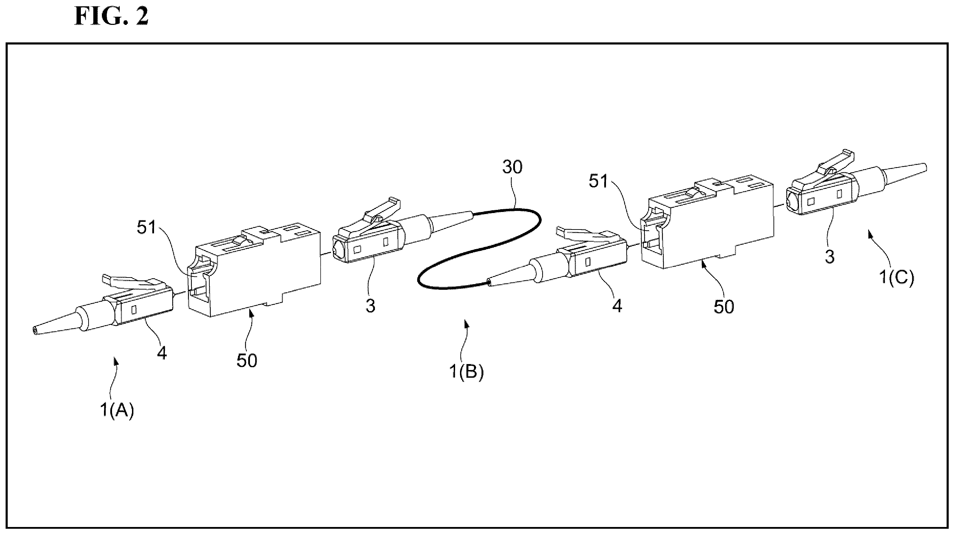

A cross section of housing 21 perpendicular to the central axis of the optical fiber is square. A latch lever 25 which detachably engages with an adapter (see FIG. 2) to which LC connector 20 is fitted is provided at a top surface 24 of housing 21 corresponding to one side of the square. In other words, latch lever 25 is provided at a part of LC connector 20 in a circumferential direction, that is, at a part of an outer circumferential surface. Latch lever 25 is accommodated in a recess formed in the adapter, and guides LC connector 20 with respect to the adapter when LC connector 20 is inserted into the adapter. Latch lever 25 defines an orientation of LC connector 20 in the circumferential direction. In the following description, when front end 23 is viewed along a central axis of LC connector 20 (i.e., the central axis of optical fiber 31), a direction in which latch lever 25 is provided is defined as an upward direction.

FIG. 2 is a perspective view illustrating a plurality of connector-attached optical fiber cables 1 (hereinafter, simply referred to as cables 1) to be connected to each other. In FIG. 2, two adapters 50 are illustrated in addition to three cables 1. Each of cables 1 includes optical fiber cable 30 having a multicore optical fiber, a first optical connector 3, and a second optical connector 4. In the following description, the three cables 1 may be referred to as a cable A, a cable B, and a cable C. First optical connector 3 and second optical connector 4 are optical connectors of the same type. That is, first optical connector 3 and second optical connector 4 are both SC connectors 10, or both are LC connectors 20. SC connector 10 and LC connector 20 are optical connectors of a type configured to be connected to a connection counterpart optical connector in a state in which orientations of SC connector 10 and LC connector 20 in the circumferential directions (specifically, the upward directions defined by protrusion 15 and latch lever 25) are aligned with respect to an orientation of the connection counterpart optical connector in a circumferential direction.

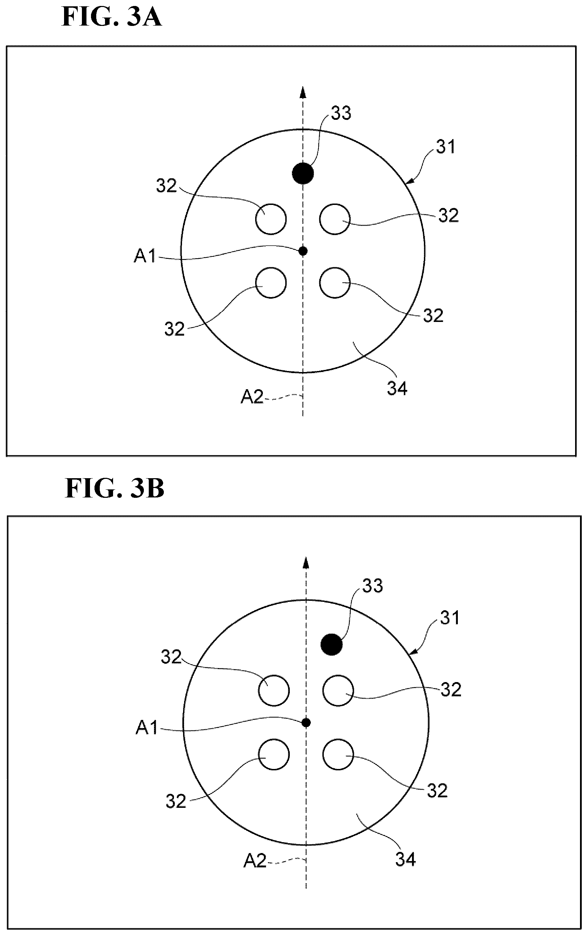

FIG. 3A and FIG. 3B are schematic diagrams illustrating examples of a cross section perpendicular to the central axis of multicore optical fiber 31 (hereinafter, simply referred to as optical fiber 31) included in optical fiber cable 30. Optical fiber 31 includes a first core 32 to an Nth core 32 (N is an integer of 2 or more), a marker 33, and a cladding 34 in which all cores 32 and marker 33 are embedded. FIG. 3A and FIG. 3B illustrate a case for N = 4. A resin coating covering an outer periphery of cladding 34 is not shown. Core 32, marker 33, and cladding 34 are made of, for example, glass. Refractive indices of all cores 32 are larger than a refractive index of cladding 34. A refractive index of marker 33 may be larger than, the same as, or smaller than the refractive index of cladding 34. In the examples illustrated in FIG. 3A and FIG. 3B, the arrangements of N cores 32 are rotationally symmetric about a central axis A1 of optical fiber 31 in a cross section of optical fiber 31 perpendicular to the central axis A1. The arrangement of cores 32 having a rotational symmetry means that, when cores 32 are rotated about the central axis A1, an arrangement of cores 32 coincides with the original arrangement of cores 32 at a rotation angle of 180° or less. In the cases of FIG. 3A and FIG. 3B, the arrangements of cores 32 are linearly symmetric with respect to a line of symmetry A2 passing through the central axis A1.

Marker 33 is provided at a position away from the central axis A1 of optical fiber 31. Marker 33 is distinguished from cores 32 by being colored, for example. Marker 33 may be provided at a position on the line of symmetry A2 as illustrated in FIG. 3A, or may be provided at a position away from the line of symmetry A2 as illustrated in FIG. 3B. Marker 33 is provided to identify each of the first core 32 to the Nth core 32. That is, based on the position of marker 33, each of N cores 32 can be identified as one of cores 32 from the first core 32 to the Nth core 32.

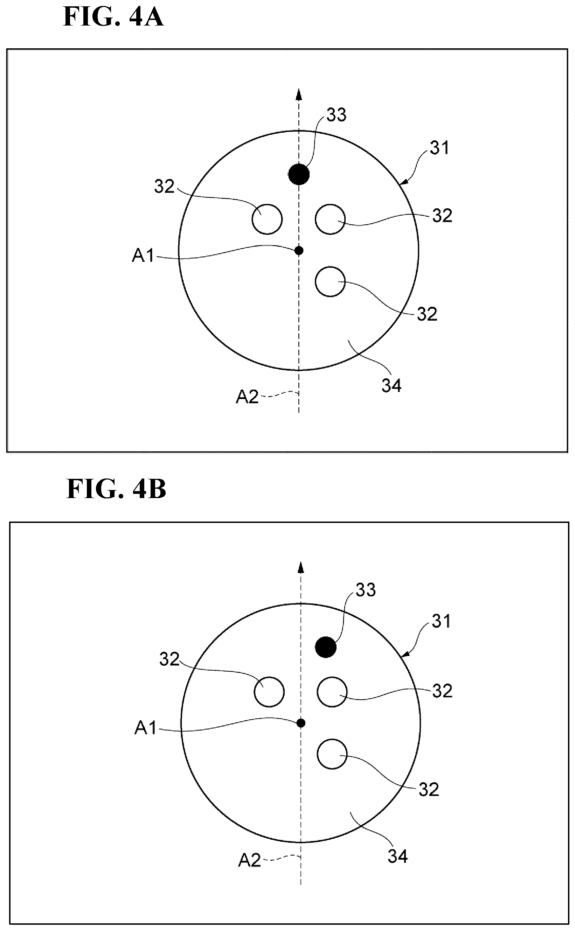

FIG. 4A and FIG. 4B are schematic views illustrating other examples of a cross section perpendicular to the central axis of optical fiber 31 included in optical fiber cable 30. In these examples, the arrangements of N cores 32 are rotationally asymmetric about central axis A1 in a cross section of optical fiber 31 perpendicular to central axis A1 of optical fiber 31. That is, when cores 32 are rotated about the central axis A1, an arrangement of cores 32 does not coincide with the original arrangement of cores 32 unless cores 32 are rotated by 360°.

With reference to FIG. 2 again, first optical connector 3 is inserted into an opening formed at one end (first end) of adapter 50. Second optical connector 4 is inserted into an opening 51 formed at the other end (second end) of adapter 50. Connection end surface 41 of ferrule 40 of second optical connector 4 comes into contact with connection end surface 41 of ferrule 40 of first optical connector 3 inside adapter 50. In this case, the positions of N cores 32 in connection end surface 41 of second optical connector 4 coincide with respective positions of N cores 32 in connection end surface 41 of first optical connector 3, so that N cores 32 of second optical connector 4 are optically coupled to respective N cores 32 of first optical connector 3.

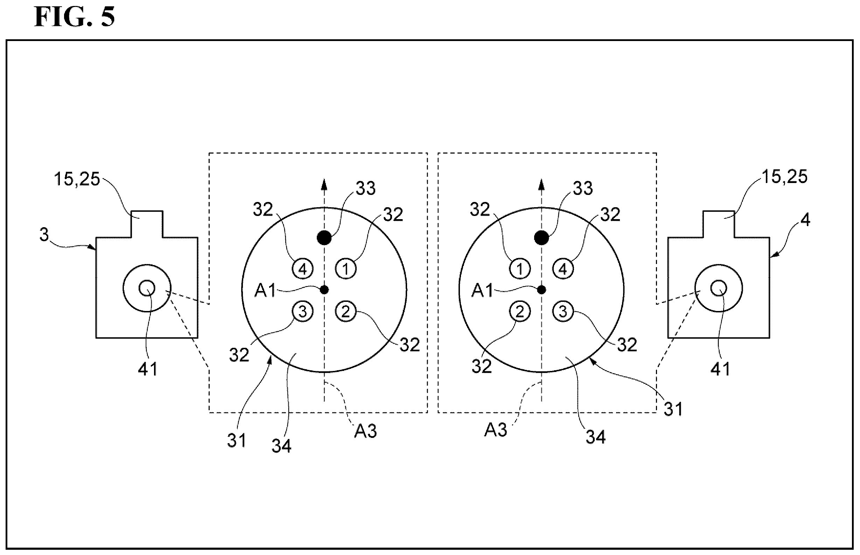

FIG. 5 is a diagram illustrating a core arrangement in each of first optical connector 3 and second optical connector 4 in one of cables 1 when connection end surfaces 41 are viewed from the front. FIG. 5 illustrates a case for N = 4, and the respective numbers from the first core 32 to the fourth core 32 are indicated in circles representing cores 32. FIG. 5 illustrates an example in which first optical connector 3 and second optical connector 4 are optical connectors of a type configured to be connected to a connection counterpart optical connector in a state in which upward directions of first optical connector 3 and second optical connector 4 are aligned with respect to an upward direction of the connection counterpart optical connector, and the core arrangement is rotationally symmetric about central axis A1.

As illustrated in FIG. 5, when connection end surfaces 41 of first optical connector 3 and second optical connector 4 are viewed with the upward directions of the optical connectors aligned, the arrangement of end surfaces of the first core 32 to the fourth core 32 in connection end surface 41 of second optical connector 4 is an arrangement in which the arrangement of end surfaces of first core 32 to fourth core 32 in connection end surface 41 of first optical connector 3 is inverted with respect to the line of center A3 of connection end surface 41 along a direction (upward direction) in which the upward directions of the optical connectors are aligned. The line of center A3 passes through the central axis A1 of optical fiber 31 and coincides with the line of symmetry A2 illustrated in FIG. 3A.

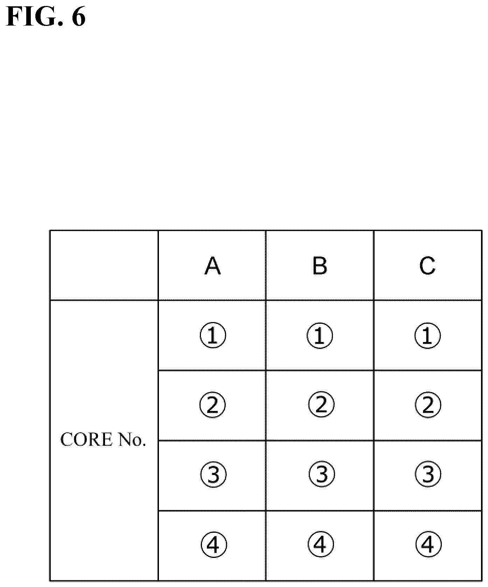

FIG. 6 is a table illustrating a correspondence of cores 32 in cable A through cable C in a case in which the first core 32 to the fourth core 32 are arranged as illustrated in FIG. 5. In the case in which first core 32 to fourth core 32 are arranged as illustrated in FIG. 5, as illustrated in FIG. 6, each of cores 32 in cable A is connected to core 32 of the same number in cable B, and each of cores 32 in cable B is connected to core 32 of the same number in the cable C. Thus, it is not necessary to manage which of cores light propagates through for each cable 1, which can simplify the connection work.

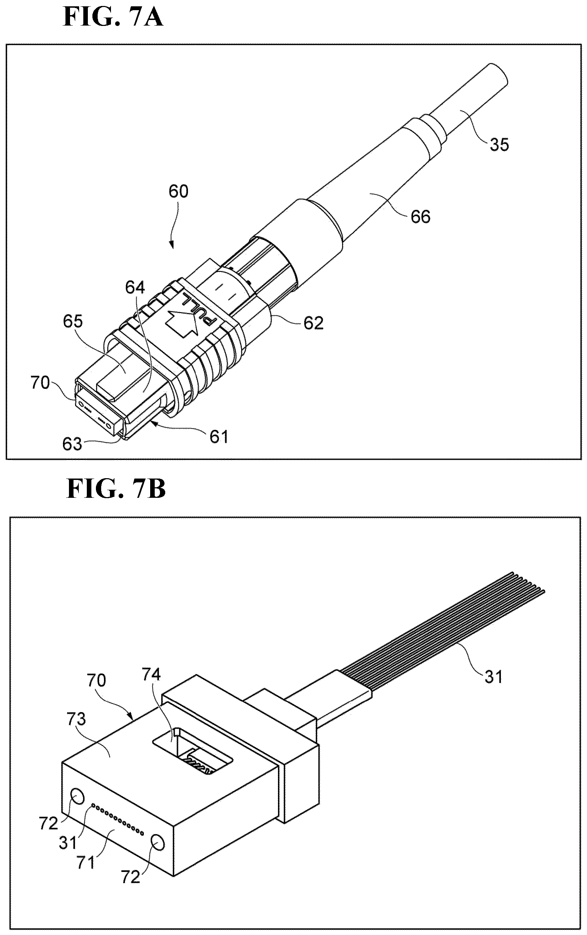

Next, a case in which first optical connector 3 and second optical connector 4 illustrated in FIG. 2 are MPO connectors which are still another type of optical connectors will be described. FIG. 7A is a perspective view illustrating an appearance of an MPO connector 60. FIG. 7B is a perspective view illustrating an appearance of an MT ferrule 70 included in MPO connector 60. MPO connector 60 includes a housing 61 made of resin. An optical fiber cable 35 extends from a boot 66 attached to a rear end 62 of housing 61. Optical fiber cable 35 includes a plurality of optical fibers 31 aligned in a direction intersecting a direction in which optical fiber cable 35 extends. A rectangular parallelepiped MT ferrule 70 protrudes from a front end 63 of housing 61. MT ferrule 70 holds a tip portion of optical fiber 31 included in optical fiber cable 35. A connection end surface 71 of MT ferrule 70 exposes the end surfaces of optical fibers 31. MT ferrule 70 has a top surface 73 facing in the same direction as a top surface 64 of housing 61. A resin pouring gap 74 is formed in top surface 73.

A cross section of housing 61 perpendicular to the central axis of optical fiber 31 is rectangular. A protrusion (key) 65 extending in a central axis direction of optical fiber 31 is provided at top surface 64 of housing 61 corresponding to one side of the rectangle. In other words, protrusion 65 is provided at a part of MPO connector 60 in a circumferential direction, that is, at a part of an outer circumferential surface. Protrusion 65 is accommodated in a recess (key groove) formed in an adapter (not shown) to which MPO connector 60 is fitted, and guides MPO connector 60 with respect to the adapter when MPO connector 60 is inserted into the adapter. Protrusion 65 defines an orientation of MPO connector 60 in the circumferential direction. In the following description, when front end 63 is viewed along a central axis of MPO connector 60 (i.e., an axis passing through the center of gravity in a cross section of MT ferrule 70 perpendicular to central axes of the plurality of optical fibers 31 and extending along the central axes of the plurality of optical fibers 31), a direction in which protrusion 65 is provided is defined as an upward direction.

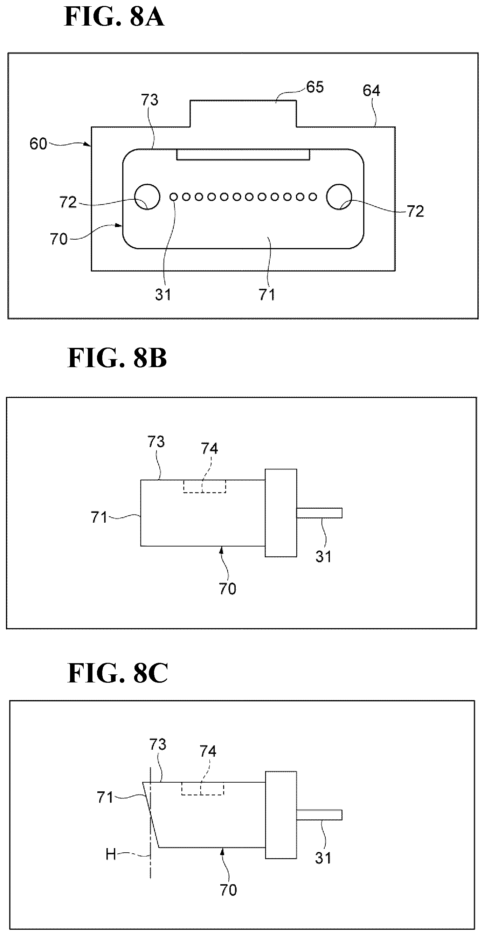

FIG. 8A is a front view of connection end surface 71 of MT ferrule 70. In connection end surface 71, end surfaces of optical fibers 31 are aligned in a lateral direction orthogonal to the upward direction. Although FIG. 8A illustrates an example in which the end surfaces of optical fibers 31 are aligned as one example, the end surfaces of optical fibers 31 may be aligned in multiple lines. A pair of guiding pin holes 72 into which guide pins are inserted are formed in connection end surface 71 of MT ferrule 70. The pair of guiding pin holes 72 are aligned in the lateral direction, and the end surfaces of optical fiber 31 are disposed between the pair of guiding pin holes 72.

FIG. 8B is a side view of MT ferrule 70 in a case in which connection end surface 71 of MT ferrule 70 is perpendicular to the central axes of optical fibers 31. FIG. 8C is a side view of MT ferrule 70 in a case in which connection end surface 71 of MT ferrule 70 is inclined with respect to a virtual plane H perpendicular to the central axes of optical fibers 31. An inclination angle of connection end surface 71 with respect to virtual plane H is, for example, 8°.

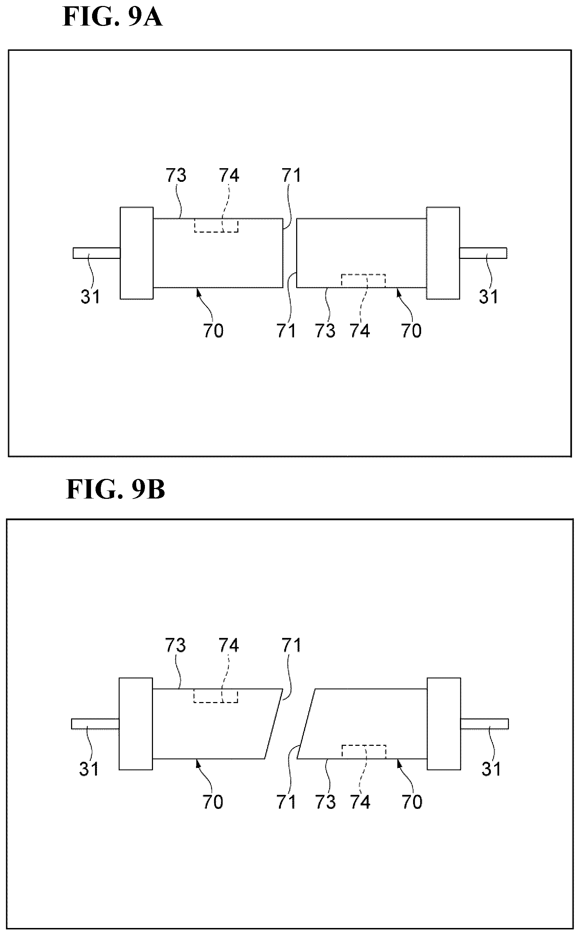

Connection end surface 71 of MT ferrule 70 and connection end surface 71 of another MT ferrule 70 as a connection counterpart face each other in a manner illustrated in FIG. 9A and FIG. 9B. FIG. 9A illustrates a case in which connection end surfaces 71 are perpendicular to the central axes of optical fibers 31. FIG. 9B illustrates a case in which connection end surfaces 71 are inclined with respect to virtual plane H. As illustrated in FIG. 9A and FIG. 9B, MPO connector 60 is an optical connector of a type configured to be connected to a connection counterpart optical connector in a state in which the upward direction of MPO connector 60 is inverted with respect to the upward direction of the connection counterpart optical connector (in other words, in a state in which the upward direction of MPO connector 60 is rotated by 180° with respect to the upward direction of the connection counterpart optical connector).

FIG. 10 is a diagram illustrating a core arrangement in each of first optical connector 3 and second optical connector 4 in one cable 1 when connection end surfaces 71 are viewed from the front in a case in which first optical connector 3 and second optical connector 4 illustrated in FIG. 2 are MPO connectors 60. FIG. 10 illustrates the core arrangement of one representative optical fiber 31 among the plurality of optical fibers 31 included in optical fiber cable 35, and the core arrangements of the other optical fibers 31 are also the same as that in FIG. 10. FIG. 10 illustrates a case for N = 4, and the respective numbers from first core 32 to fourth core 32 are indicated in circles representing cores 32. FIG. 10 illustrates an example in which first optical connector 3 and second optical connector 4 are optical connectors of a type configured to be connected to a connection counterpart optical connector in a state in which the upward directions of the optical connectors are inverted with respect to the upward direction of the connection counterpart optical connector, and the core arrangement is rotationally symmetric about central axis A1.

As illustrated in FIG. 10, when connection end surfaces 71 of first optical connector 3 and second optical connector 4 are viewed with the upward directions of the optical connectors aligned, the arrangement of end surfaces of first core 32 to fourth core 32 on connection end surface 71 of second optical connector 4 is an arrangement in which the arrangement of the end surfaces of first core 32 to fourth core 32 in connection end surface 71 of first optical connector 3 is inverted with respect to the line of center A3 of connection end surface 41 along a direction (upward direction) in which the upward directions of the optical connectors are aligned.

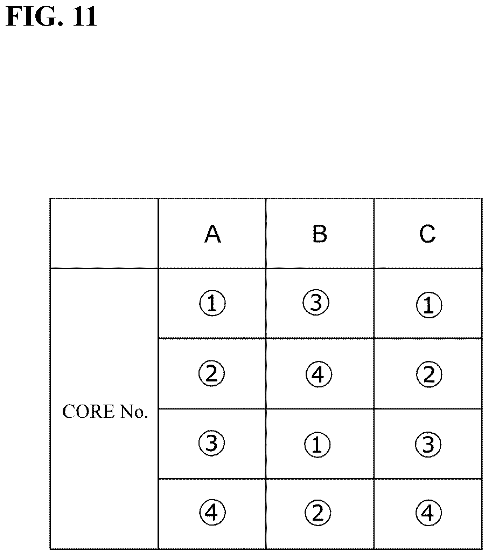

FIG. 11 is a table illustrating the correspondence of cores 32 in cable A through cable C in a case in which first core 32 to fourth core 32 of each of optical fibers 31 are arranged as illustrated in FIG. 10. When first core 32 to fourth core 32 are arranged as illustrated in FIG. 10, as illustrated in FIG. 11, each of cores 32 in cable A is connected to core 32 of a different number in cable B, and each of cores 32 in cable B is connected to core 32 of a further different number in cable C. However, each of cores 32 in cable C is connected to core 32 of the same number in cable A via cable B. Thus, when the number of cables 1 to be connected is an even number, it is not necessary to manage which of cores light propagates through for each cable 1, which can simplify the connection work.

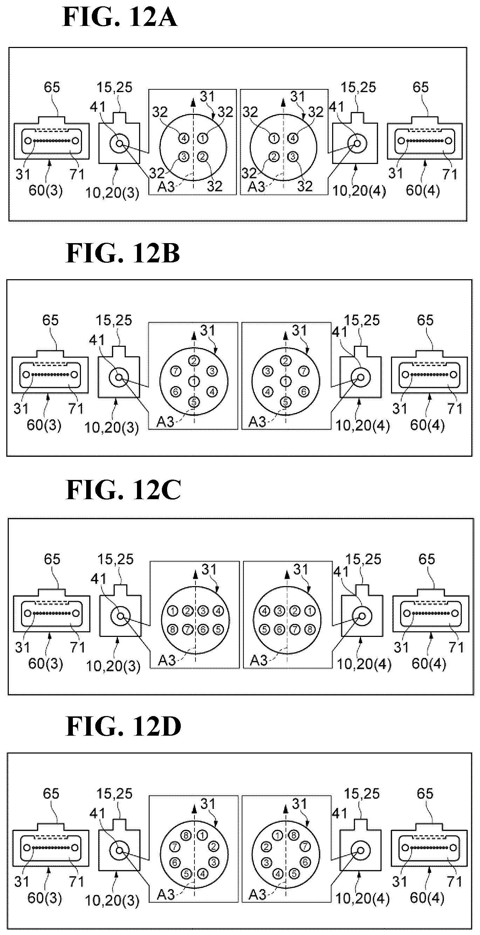

The number N of cores 32 and the arrangement thereof are not limited to the example of FIG. 12A illustrated in FIG. 5 and FIG. 10. FIG. 12B, FIG. 12C, and FIG. 12D are diagrams illustrating modifications in the number N of cores 32 and the arrangement thereof. In any of these cases, when connection end surfaces 41 (or 71) of first optical connector 3 and second optical connector 4 are viewed with the upward directions of the optical connectors aligned, the arrangement of the end surfaces from the first core 32 to the Nth core 32 in connection end surface 41 (or 71) of second optical connector 4 is an arrangement in which the arrangement of the end surfaces from the first core 32 to the Nth core 32 in connection end surface 41 (or 71) of first optical connector 3 is inverted with respect to the line of center A3.

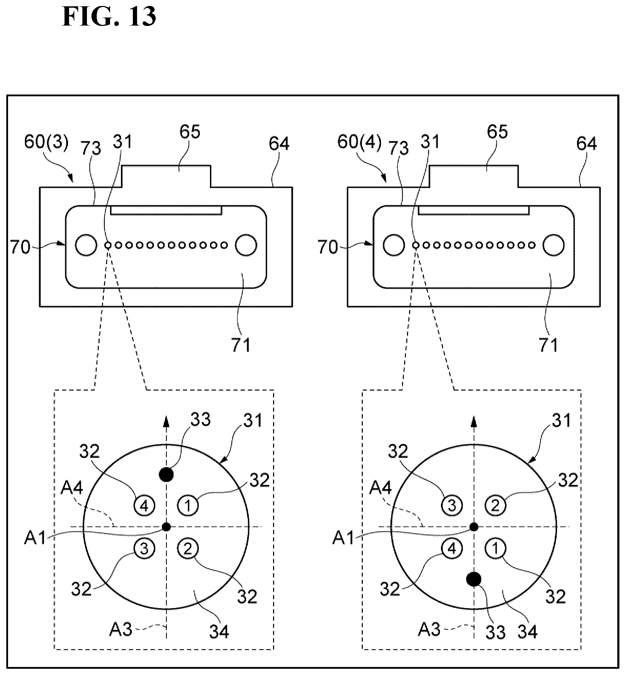

FIG. 13 is a diagram illustrating another embodiment of a core arrangement in each of first optical connector 3 and second optical connector 4 in one cable 1 when connection end surfaces 71 are viewed from the front. FIG. 13 illustrates an example in which first optical connector 3 and second optical connector 4 are optical connectors (for example, MPO connectors 60) of a type configured to be connected to a connection counterpart optical connectors in a state in which the upward directions of first optical connector 3 and second optical connector 4 are inverted with respect to the upward direction of the connection counterpart optical connector, and the core arrangement is rotationally symmetric about central axis A1.

As illustrated in FIG. 13, when connection end surfaces 71 of first optical connector 3 and second optical connector 4 are viewed with the upward directions of the optical connectors aligned, the arrangement of the end surfaces of first core 32 to fourth core 32 in connection end surface 71 of second optical connector 4 is an arrangement in which the arrangement of the end surfaces of first core 32 to fourth core 32 in connection end surface 71 of first optical connector 3 is inverted with respect to the line of center A4 of connection end surface 41 along the lateral direction orthogonal to the direction (upward direction) in which the upward directions of the optical connectors are aligned. The line of center A4 passes through the central axis A1 of optical fiber 31 and is orthogonal to the line of symmetry A2 illustrated in FIG. 3A.

In a case in which first core 32 to fourth core 32 are arranged as illustrated in FIG. 13, the correspondence of cores 32 in cable A through cable C is as illustrated in FIG. 6. That is, each of cores 32 in cable A is connected to core 32 of the same number in cable B, and each of cores 32 in cable B is connected to core 32 of the same number in cable C. Thus, it is not necessary to manage which of cores light propagates through for each cable 1, which can simplify the connection work.

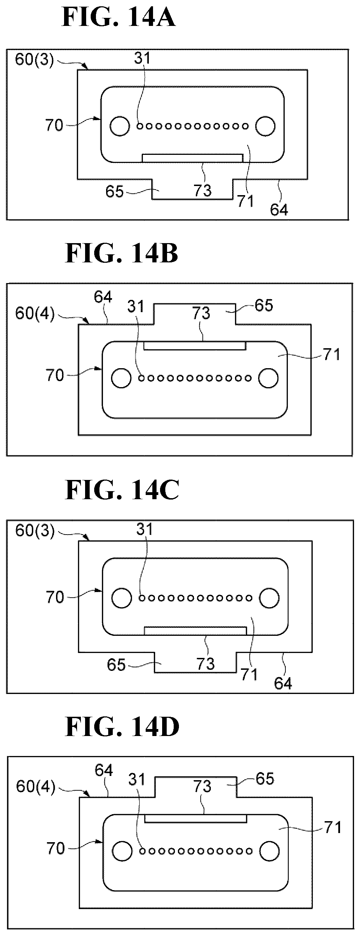

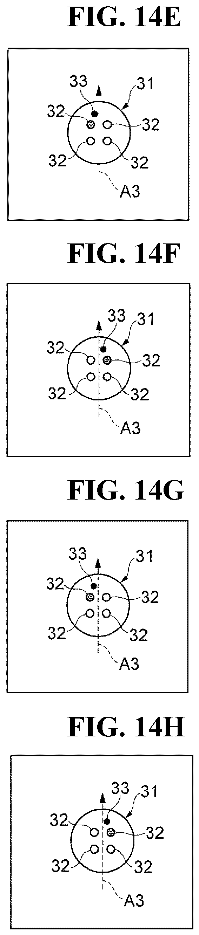

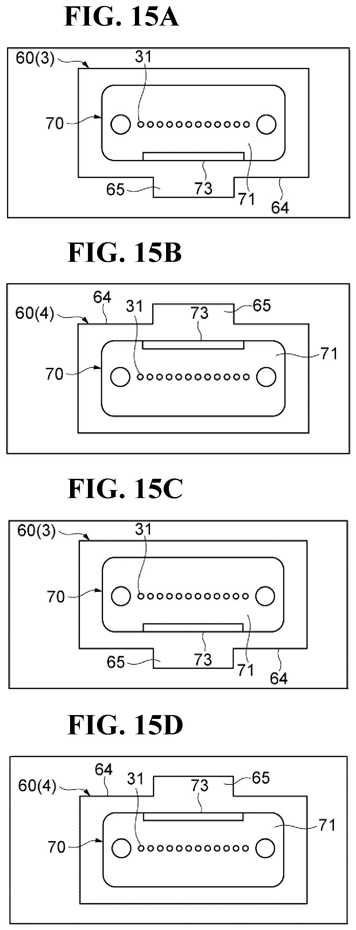

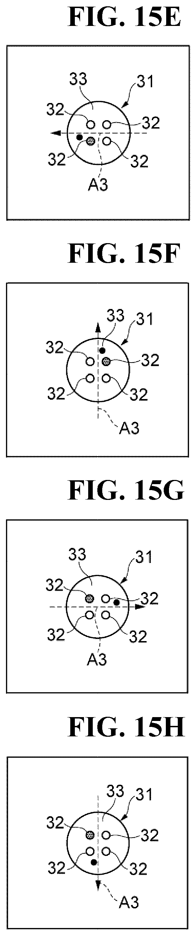

FIG. 14A to FIG. 14H and FIG. 15A to FIG. 15H are diagrams illustrating an effect obtained by the core arrangements illustrated in FIG. 13. FIG. 14A to FIG. 14H illustrate cases in which the core arrangements are the embodiment illustrated in FIG. 13. FIG. 15A to FIG. 15H illustrate cases in which the core arrangements are not specifically defined. FIG. 14A and FIG. 14B are front views illustrating connection end surfaces 71 of first optical connector 3 and second optical connector 4 in cable A, respectively. FIG. 14C and FIG. 14D are front views illustrating connection end surfaces 71 of first optical connector 3 and second optical connector 4 in cable B to be connected to cable A, respectively. FIG. 14E, FIG. 14F, FIG. 14G, and FIG. 14H illustrate the end surfaces of optical fibers 31 in the optical connectors illustrated in FIG. 14A, FIG. 14B, FIG. 14C, and FIG. 14D, respectively. In these end surfaces, when light propagates through one of cores 32, core 32 through which light propagates is marked with halftone dots. FIG. 15A and FIG. 15B are front views illustrating connection end surfaces 71 of first optical connector 3 and second optical connector 4 in cable A, respectively. FIG. 15C and FIG. 15D are front views illustrating connection end surfaces 71 of first optical connector 3 and second optical connector 4 in cable B to be connected to cable A. FIG. 15E, FIG. 15F, FIG. 15G, and FIG. 15H illustrates the end surfaces of optical fibers 31 in the optical connectors illustrated in FIG. 15A, FIG. 15B, FIG. 15C, and FIG. 15D, respectively. In these end surfaces, when light propagates through one of cores 32, core 32 through which light propagates is marked with halftone dots.

As illustrated in FIG. 15A to FIG. 15H, in a case in which the core arrangement in the optical connector is not specifically defined, the core positions where light propagates are different from each other in cable A and cable B. As a result, the connection work becomes extremely complicated because the correspondence between N cores 32 in cable A and N cores 32 in cable B needs to be managed. In contrast, according to the core arrangement illustrated in FIG. 13, as illustrated in FIG. 14A to FIG. 14H, the positions of cores 32 through which light propagates are the same in cable A and cable B. Thus, it is not necessary to manage the correspondence between N cores 32 in cable A and N cores 32 in cable B, which can facilitate the connection work.

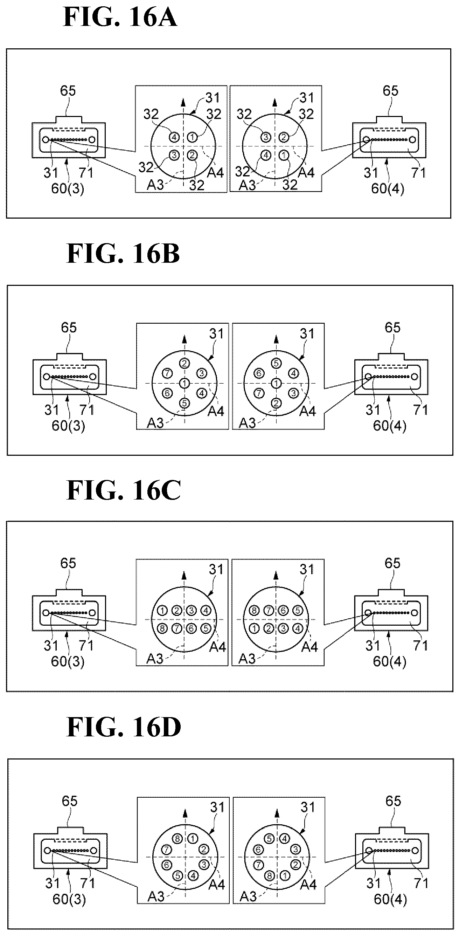

The number N of cores 32 and the arrangement thereof are not limited to the examples illustrated in FIG. 15A to FIG. 15H. FIG. 16A to FIG. 16D are diagrams illustrating modifications of the number N of cores 32 and the arrangement thereof. In any of these cases, when connection end surfaces 41 (or 71) of first optical connector 3 and second optical connector 4 are viewed with the upward directions of the optical connectors aligned, the arrangement of the end surfaces from the first core 32 to the Nth core 32 in connection end surface 41 (or 71) of second optical connector 4 is an arrangement in which the arrangement of the end surfaces from the first core 32 to the Nth core 32 in connection end surface 41 (or 71) of first optical connector 3 is inverted with respect to the line of center A4.

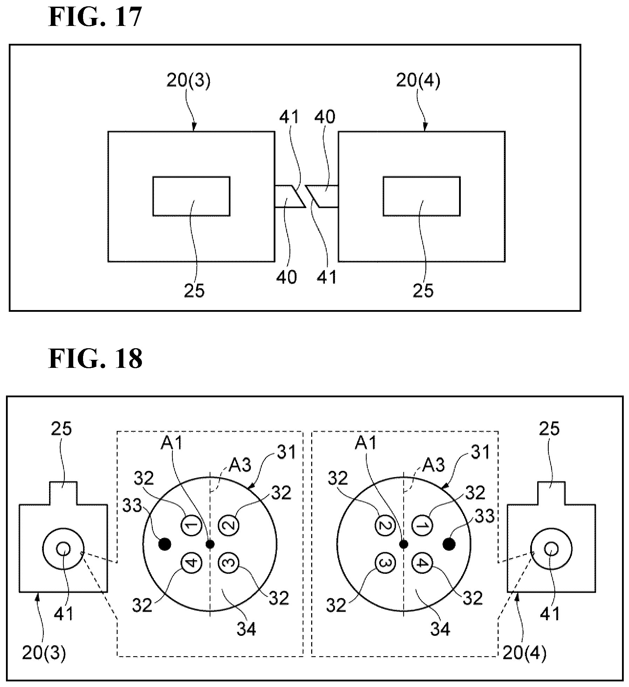

FIG. 17 is a top view schematically illustrating one SC connector 10 and another SC connector 10 as a connection counterpart of SC connector 10 in a case where connection end surface 41 of ferrule 40 of SC connector 10 is inclined in the lateral direction orthogonal to the direction (upward direction) in which the upward directions of the optical connectors are aligned. FIG. 18 is a diagram illustrating the core arrangements of first optical connector 3 and second optical connector 4 in one cable 1 when connection end surfaces 41 thereof are viewed from the front in a case where first optical connector 3 and second optical connector 4 illustrated in FIG. 2 are SC connectors 10 illustrated in FIG. 17. FIG. 18 illustrates an example of a case in which first optical connector 3 and second optical connector 4 are optical connectors of a type configured to be connected to a connection counterpart optical connector in a state in which the upward directions of first optical connector 3 and second optical connector 4 are aligned with respect to the upward direction of the connection counterpart optical connector, the core arrangement is rotationally symmetric about the central axis A1, and the inclination directions of connection end surfaces 41 are the lateral direction.

In the embodiment illustrated in FIG. 18, when connection end surfaces 41 of first optical connector 3 and second optical connector 4 are viewed with the upward directions of the optical connectors aligned, the arrangement of the end surfaces of first core 32 to fourth core 32 in connection end surface 41 of second optical connector 4 is an arrangement in which the arrangement of the end surfaces of the first core 32 to the Nth core 32 in connection end surface 41 of first optical connector 3 is inverted with respect to the line of center A3 of connection end surface 41 along the direction (upward direction) in which the upward directions of the optical connectors are aligned. In this case, the correspondence of cores 32 in cable A through cable C is as illustrated in FIG. 6. That is, each of cores 32 in cable A is connected to core 32 of the same number in cable B, and each of cores 32 in cable B is connected to core 32 of the same number in cable C. Thus, it is not necessary to manage which of cores light propagates through for each cable 1, which can simplify the connection work.

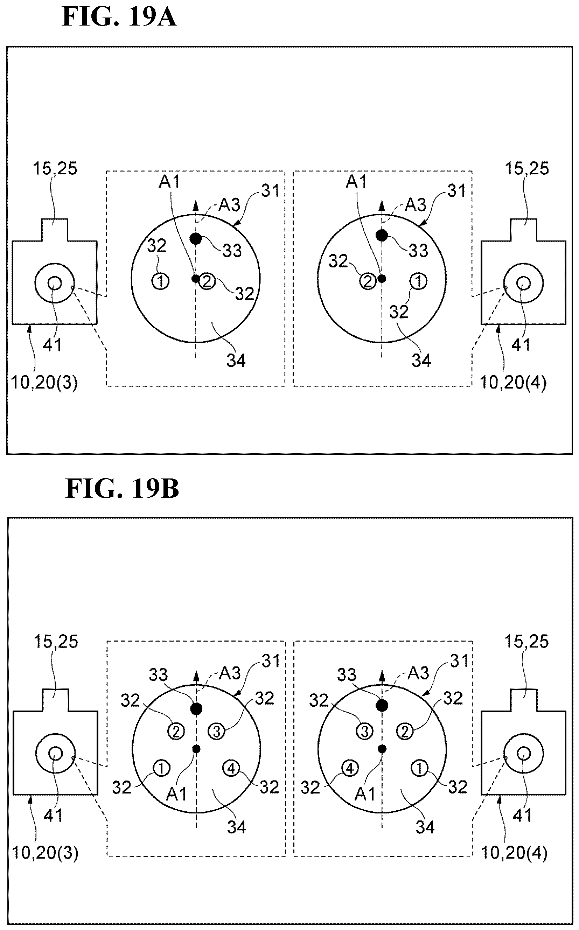

FIG. 19A and FIG. 19B are diagrams illustrating core arrangements in a case in which first optical connector 3 and second optical connector 4 are optical connectors (for example, SC connectors 10 or LC connectors 20) of a type configured to be connected to a connection counterpart optical connector in a state in which the upward directions of first optical connector 3 and second optical connector 4 are aligned with the upward direction of the connection counterpart optical connector, and the arrangements from the first core 32 to the Nth core 32 are rotationally asymmetric about the central axis A1. FIG. 19A illustrates a case in which the number N of cores 32 is 2. FIG. 19B illustrates a case in which the number N of cores 32 is 4. In the embodiments illustrated in FIG. 19A and FIG. 19B, the end surfaces of the first core 32 to the Nth core 32 are arranged as follows. That is, when connection end surfaces 41 of first optical connector 3 and second optical connector 4 are viewed with the upward directions of the optical connectors aligned, the arrangement of the end surfaces of the first core 32 to the Nth core 32 in connection end surface 41 of second optical connector 4 is an arrangement in which the arrangement of the end surfaces of the first core 32 to the Nth core 32 in connection end surface 41 of first optical connector 3 is inverted with respect to the line of center A3.

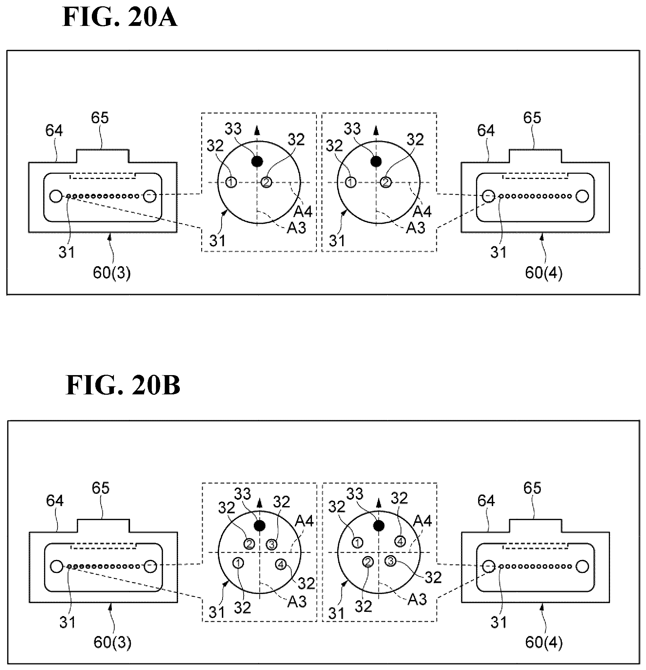

FIG. 20A and FIG. 20B are diagrams illustrating core arrangements in a case where first optical connector 3 and second optical connector 4 are optical connectors (for example, MPO connectors 60) of a type configured to be connected to a connection counterpart optical connector in a state in which the upward directions of first optical connector 3 and second optical connector 4 are inverted with respect to the upward direction of the connection counterpart optical connector, and the arrangements from the first core 32 to the Nth core 32 are rotationally asymmetric about the central axis A1. FIG. 20A illustrates a case in which the number N of cores 32 is 2. FIG. 20B illustrates a case in which the number N of cores 32 is 4. In the embodiments illustrated in FIG. 20A and FIG. 20B, the end surfaces of the first core 32 to the Nth core 32 are arranged as follows. That is, when connection end surfaces 41 of first optical connector 3 and second optical connector 4 are viewed with the upward directions of the optical connectors aligned, the arrangement of the end surfaces of the first core 32 to the Nth core 32 in connection end surface 41 of second optical connector 4 is an arrangement in which the arrangement of the end surfaces of the first core 32 to the Nth core 32 in connection end surface 41 of first optical connector 3 is inverted with respect to the line of center A4.

According to the embodiments illustrated in FIG. 19A, FIG. 19B, FIG. 20A and FIG. 20B, the correspondence of cores 32 in cable A through cable C is as illustrated in FIG. 6. That is, each of cores 32 in cable A is connected to core 32 of the same number in cable B, and each of cores 32 in cable B is connected to core 32 of the same number in cable C. Thus, it is not necessary to manage which of cores light propagates through for each cable 1, which can simplify the connection work.

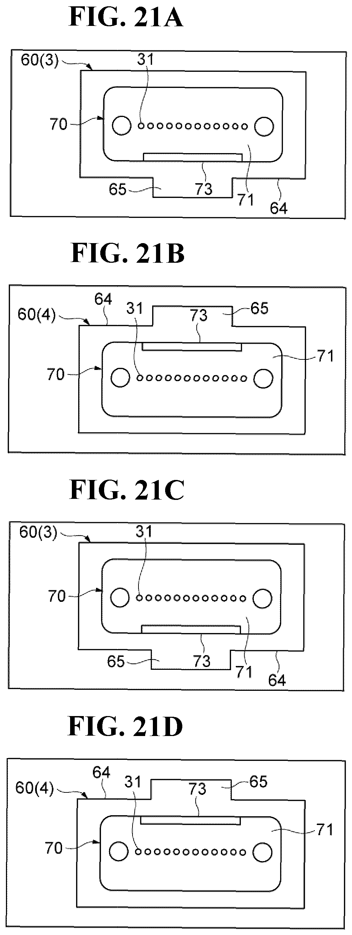

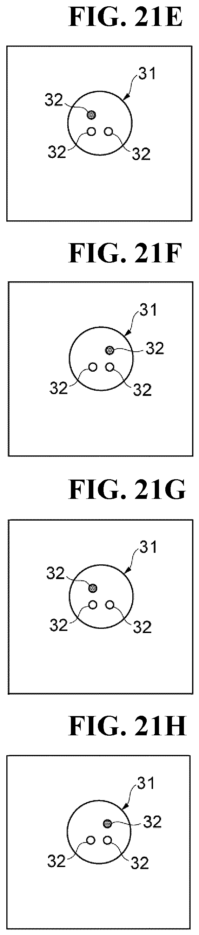

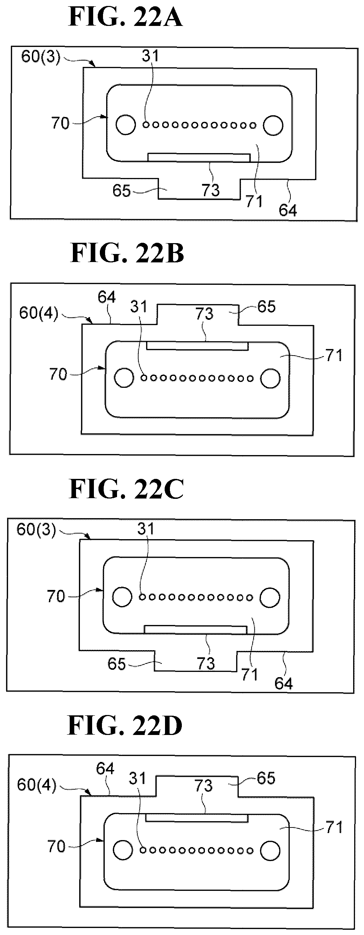

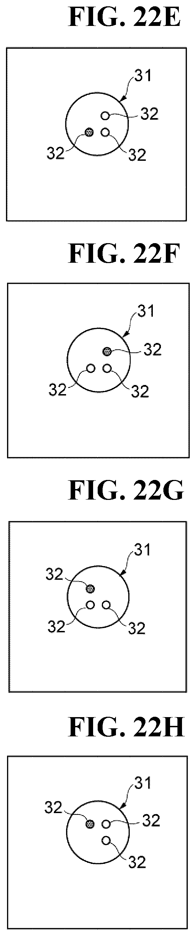

FIG. 21A to FIG. 21H and FIG. 22A to FIG. 22H are diagrams illustrating effects obtained by the core arrangements illustrated in FIG. 20A and FIG. 20B. FIG. 21A to FIG. 21H illustrates the cases in which the core arrangements are the embodiments illustrated in FIG. 20A and FIG. 20B. FIG. 22A to FIG. 22H illustrate the cases in which the core arrangements are not specifically defined. FIG. 21A, FIG. 21B, FIG. 22A, and FIG. 22B are front views illustrating connection end surfaces 71 of first optical connector 3 and second optical connector 4 in cable A. FIG. 21C, FIG. 21D, FIG. 22C, and FIG. 22D are front views illustrating connection end surfaces 71 of first optical connector 3 and second optical connector 4 in cable B to be connected to cable A. FIG. 21E to FIG. 21H illustrates the end surfaces of optical fibers 31 in the optical connectors illustrated in FIG. 21A to FIG. 21D, respectively. Similarly, FIG. 22E to FIG. 22H illustrated the end surfaces of optical fibers 31 in the optical connectors illustrated in FIG. 22A to FIG. 22D, respectively. In these end surfaces, when light propagates through one of cores 32, core 32 through which light propagates is marked with halftone dots.

As illustrated in FIG. 22A to FIG. 22H, in a case in which the core arrangement in the optical connector is not specifically defined, the core positions through which light propagates are different from each other in cable A and cable B. As a result, the connection work becomes extremely complicated because the correspondence between N cores 32 of cable A and N cores 32 of cable B needs to be managed. In contrast, according to the core arrangements illustrated in FIG. 20A and FIG. 20B, as illustrated in FIG. 21A to FIG. 21H, the positions of cores 32 through which light propagates are the same in cable A and cable B. Thus, it is not necessary to manage the correspondence between N cores 32 in cable A and N cores 32 in cable B, which can facilitate the connection work.

### (First Modification)

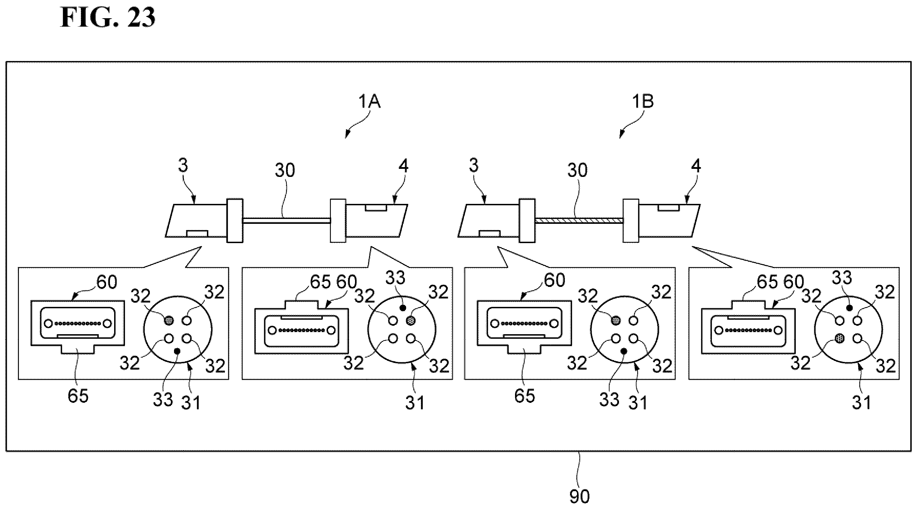

FIG. 23 is a diagram schematically illustrating an optical transmission system 90 including connector-attached optical fiber cables 1A and 1B (hereinafter, simply referred to as a cable 1A and a cable 1B) as a first modification of the above embodiment. Cable 1A and cable 1B have optical connectors (for example, MPO connectors 60) of a type configured to be connected in a state in which the upward directions of the optical connectors are inverted with respect to the upward direction of a connection counterpart optical connector as first optical connector 3 and second optical connector 4. First cable 1A has an arrangement of cores 32 illustrated in FIG. 10. Second cable 1B has an arrangement of cores 32 illustrated in FIG. 13.

As described above, in a case in which cable 1A and cable 1B which differ from each other in the arrangement of cores 32 are mixed in optical transmission system 90, the appearance of cable 1A may be different from the appearance of cable 1B in order to easily identify cable 1B and the 1A. The different appearance means, for example, different color of a coating resin of optical fiber cable 30, different color of resin housing 61 of MPO connector 60, different color of boots 16, 26, and 66, or the like.

### (Second Modification)

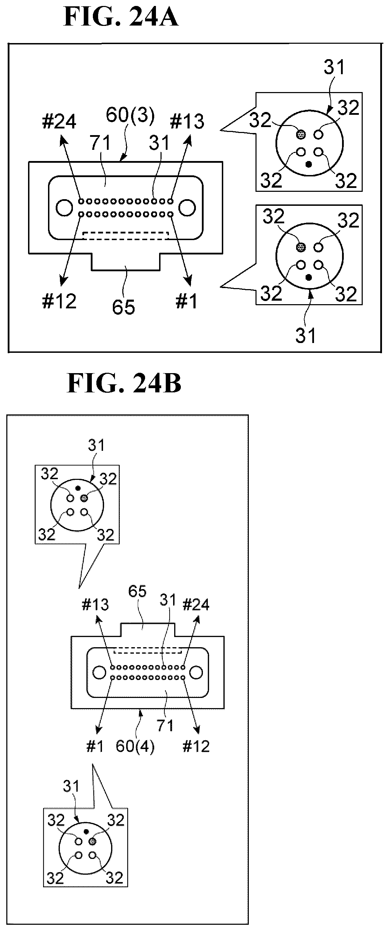

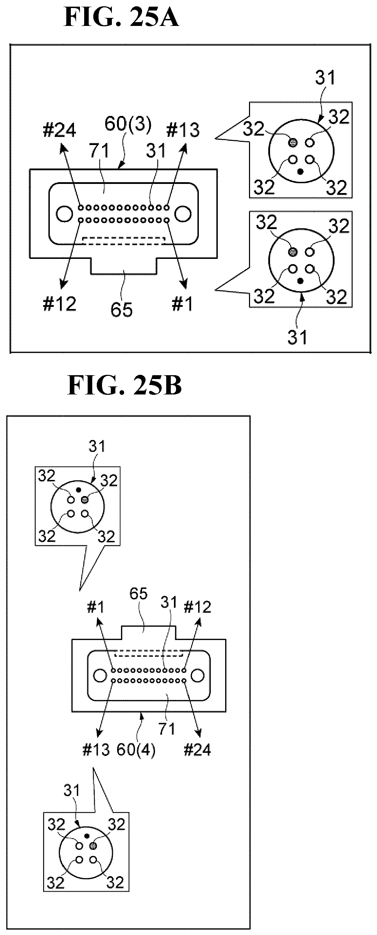

FIG. 24A, FIG. 24B, FIG. 25A, and FIG. 25B are diagrams illustrating examples in which first optical connector 3 and second optical connector 4 are optical connectors (for example, MPO connectors 60) of a type configured to be connected to a connection counterpart optical connector in a state in which the upward directions of first optical connector 3 and second optical connector 4 are inverted with respect to the upward direction of the connection counterpart optical connector, and the end surfaces of the first optical fiber 31 to the Mth optical fiber 31 are arranged in multiple lines (for example, two lines) in connection end surface 71. Each of FIG. 24A and FIG. 25A illustrates connection end surface 71 of first optical connector 3. Each of FIG. 24B and FIG. 25B illustrates connection end surface 71 of second optical connector 4. In the figures, the number with "#" indicates the number of optical fiber 31.

In the example illustrated in FIG. 24A and FIG. 24B, when connection end surfaces 71 of first optical connector 3 and second optical connector 4 are viewed with the upward directions of the optical connectors aligned, the arrangement of the end surfaces of the first optical fiber 31 to the Mth optical fiber 31 in connection end surface 71 of second optical connector 4 is an arrangement in which the arrangement of the end surfaces of the first optical fiber 31 to the Mth optical fiber 31 in connection end surface 71 of first optical connector 3 is inverted in a vertical direction. In the example illustrated in FIG. 25A and FIG. 25B, when connection end surfaces 71 of first optical connector 3 and second optical connector 4 are viewed with the upward directions of the optical connectors aligned, the arrangement of the end surfaces of the first optical fiber 31 to the Mth optical fiber 31 in connection end surface 71 of second optical connector 4 is the same as the arrangement of the end surfaces of the first optical fiber 31 to the Mth optical fiber 31 in connection end surface 71 of first optical connector 3.

### (Third Modification)

In the above embodiment, the structures of portions to be fitted to the connection counterpart optical connector in first optical connector 3 and second optical connector 4 may be different from each other. For example, in a case in which first optical connector 3 and second optical connector 4 are SC connectors 10, housing 11 of one of first optical connector 3 and second optical connector 4 may have a recess (key groove) instead of protrusion 15. Similarly, in a case in which first optical connector 3 and second optical connector 4 are MPO connectors 60, housing 61 of one of first optical connector 3 and second optical connector 4 may have a recess (key groove) instead of protrusion 65. Alternatively, in a case in which first optical connector 3 and second optical connector 4 are MPO connectors 60, guide pins to be inserted into guiding pin holes 72 may be provided in advance for only one of first optical connector 3 and second optical connector 4. As described above, first optical connector 3 and second optical connector 4 have different structures of the portions to be fitted to the connection counterpart optical connector, which can easily identify first optical connector 3 and second optical connector 4.

The connector-attached optical fiber cable and the optical transmission system according to the present disclosure are not limited to the above-described embodiments, and various modifications can be made. For example, in the above embodiments, SC connector 10 and LC connector 20 are described as examples of the optical connectors of the type configured to be connected to a connection counterpart optical connector in the state where the upward directions thereof are aligned. However, as such optical connectors of the type, various optical connectors other than SC connector 10 and LC connector 20 can be applied. In the above embodiments, MPO connector 60 is described as an example of the optical connector of the type configured to be connected to a connection counterpart optical connector in the state in which the upward direction of MPO connector 60 is inverted with respect to the upward direction of the connection counterpart optical connector. However, various optical connectors other than MPO connector 60 can be applied as such an optical connector of the type.

### REFERENCE SIGNS LIST

1 1A, 1B connector-attached optical fiber cable
3 first optical connector
4 second optical connector
10 SC connector
11 housing
12 rear end
13 front end
14 top surface
15 protrusion
16 boot
20 LC connector
21 housing
22 rear end
23 front end
24 top surface
25 latch lever
26 boot
30 optical fiber cable
31 multicore optical fiber
32 core
33 marker
34 cladding
35 optical fiber cable
40 ferrule
41 connection end surface
50 adapter
51 opening
60 MPO connector
61 housing
62 rear end
63 front end
64 top surface
65 protrusion
66 boot
70 MT ferrule
71 connection end surface
72 guiding pin hole
73 top surface
74 resin pouring gap
90 optical transmission system
A, B, C connector-attached optical fiber cable
A1 central axis
A2 line of symmetry
A3, A4 line of center
H virtual plane

## Claims

1. A connector-attached optical fiber cable comprising:
a multicore optical fiber including a first core to an Nth core (N is an integer of 2 or more);
a first optical connector attached to a first end of the multicore optical fiber; and
a second optical connector attached to a second end of the multicore optical fiber,
wherein an arrangement of the cores from the first core to the Nth core is rotationally asymmetric about a central axis of the multicore optical fiber in a cross section of the multicore optical fiber perpendicular to the central axis,
wherein the first optical connector and the second optical connector are optical connectors of a type configured to be connected to a connection counterpart optical connector in a state in which upward directions of the first optical connector and the second optical connector are aligned with an upward direction of the connection counterpart optical connector, and
wherein, when connection end surfaces of the first optical connector and the second optical connector are viewed with the upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction in which the upward directions are aligned.

2. A connector-attached optical fiber cable comprising:
a multicore optical fiber including a first core to an Nth core (N is an integer of 2 or more);
a first optical connector attached to a first end of the multicore optical fiber; and
a second optical connector attached to a second end of the multicore optical fiber,
wherein an arrangement from the first core to the Nth core is rotationally asymmetric about a central axis of the multicore optical fiber in a cross section of the multicore optical fiber perpendicular to the central axis,
wherein the first optical connector and the second optical connector are optical connectors of a type configured to be connected to a connection counterpart optical connector in a state in which upward directions of the first optical connector and the second optical connector are inverted with respect to an upward direction of the connection counterpart optical connector, and
wherein, when connection end surfaces of the first optical connector and the second optical connector are viewed with the upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction orthogonal to a direction in which the upward directions are aligned.

3. A connector-attached optical fiber cable comprising:
a multicore optical fiber including a first core to an Nth core (N is an integer of 2 or more);
a first optical connector attached to a first end of the multicore optical fiber; and
a second optical connector attached to a second end of the multicore optical fiber,
wherein an arrangement from the first core to the Nth core is rotationally symmetric about a central axis of the multicore optical fiber in a cross section of the multicore optical fiber perpendicular to the central axis, and
wherein, when connection end surfaces of the first optical connector and the second optical connector are viewed with upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction in which the upward directions are aligned.

4. The connector-attached optical fiber cable according to claim 3, wherein the first optical connector and the second optical connector are optical connectors of a type configured to be connected to a connection counterpart optical connector in a state in which the upward directions of the first optical connector and the second optical connector are aligned with an upward direction of the connection counterpart optical connector.

5. The connector-attached optical fiber cable according to claim 3, wherein the first optical connector and the second optical connector are optical connectors of a type configured to be connected to a connection counterpart optical connector in a state in which the upward directions of the first optical connector and the second optical connector are inverted with respect to an upward direction of the connection counterpart optical connector.

6. A connector-attached optical fiber cable comprising:
a multicore optical fiber including a first core to an Nth core (N is an integer of 2 or more);
a first optical connector attached to a first end of the multicore optical fiber; and
a second optical connector attached to a second end of the multicore optical fiber,
wherein an arrangement from the first core to the Nth core is rotationally symmetric about a central axis of the multicore optical fiber in a cross section of the multicore optical fiber perpendicular to the central axis,
wherein the first optical connector and the second optical connector are optical connectors of a type configured to be connected to a connection counterpart optical connector in a state in which upward directions of the first optical connector and the second optical connector are inverted with respect to an upward direction of the connection counterpart optical connector, and
wherein, when connection end surfaces of the first optical connector and the second optical connector are viewed with the upward directions aligned, an arrangement of end surfaces from the first core to the Nth core in the connection end surface of the second optical connector is an arrangement in which an arrangement of end surfaces from the first core to the Nth core in the connection end surface of the first optical connector is inverted with respect to a line of center of the connection end surface along a direction orthogonal to a direction in which the upward directions are aligned.

7. The connector-attached optical fiber cable according to any one of claims 1 to 6, wherein the first optical connector and the second optical connector have portions to be fitted to the connection counterpart optical connector, the portions having different structures.

8. The connector-attached optical fiber cable according to any one of claims 1 to 7, wherein the connection end surfaces are perpendicular to the central axis of the multicore optical fiber.

9. The connector-attached optical fiber cable according to any one of claims 2, 5, and 6, wherein the connection end surfaces are inclined with respect to a virtual plane perpendicular to the central axis of the multicore optical fiber.

10. The connector-attached optical fiber cable according to any one of claims 3 to 6, wherein the multicore optical fiber has a marker for identifying the first core to the Nth core.

11. An optical transmission system comprising:
a first connector-attached optical fiber cable that is the connector-attached optical fiber cable according to claim 1; and
a second connector-attached optical fiber cable that is the connector-attached optical fiber cable according to claim 2,
wherein an appearance of the second connector-attached optical fiber cable is different from an appearance of the first connector-attached optical fiber cable.

12. An optical transmission system comprising:
a third connector-attached optical fiber cable that is the connector-attached optical fiber cable according to claim 3; and
a fourth connector-attached optical fiber cable that is the connector-attached optical fiber cable according to claim 6,
wherein an appearance of the fourth connector-attached optical fiber cable is different from an appearance of the third connector-attached optical fiber cable.
